Europäisches Patentamt

European Patent Office

Office européen des brevets

(11) Publication number: **0 467 443 A1**

# EUROPEAN PATENT APPLICATION

(21) Application number: **91201735.7**

(22) Date of filing: **04.07.91**

(51) Int. Cl.5: **H02G 3/04**, F16L 11/16

(30) Priority: **19.07.90 IT 2151290 U**

(43) Date of publication of application:
**22.01.92 Bulletin 92/04**

(84) Designated Contracting States:
**AT BE CH DE DK ES FR GB GR IT LI LU NL SE**

(71) Applicant: **MEC 2000 S.R.L.**
**Via Politi 10**
**I-20090 Trezzano Sul Naviglio (Milano )(IT)**

(72) Inventor: **Guaglione, Angelo**
**Via Paolo VI, 11**
**I-20088 Gudo Visconti Milan(IT)**

(74) Representative: **Henke, Erwin et al**
**Ing.Barzanò & Zanardo S.p.A. Via**
**Borgonuovo, 10**
**I-20121 Milano(IT)**

(54) **Spiral protection tube.**

(57) The spiral protection tube (1) comprises turns (4) joined together at their edges (5) by the engagement of opposing facing surfaces (6), which are folded to form an acute angle ($\alpha$) with the main axis (3) of the tube (1). Such a structure is both economical and strong, particularly against stresses which arise when the tube (1) is bent to U-shape.

Fig.2

This invention relates to a spiral protection tube.

Currently known spiral protection tubes comprise a usually metal strip wound into turns which are joined to each other at their edges by the engagement of opposing facing surfaces.

If such a tube is intended to contain electrical conductors it is preferably covered with a sheath of plastics material, usually P.V.C., which without substantially altering its flexibility and axial elasticity, gives it insulating and impermeability properties.

Although known protection tubes are of simple and economical structure they adequately perform the task for which they are designed provided they are not bent into U-shape with a radius of curvature which is particularly small compared with their diameter.

In such a case the stresses which arise at the folded parallel edges which connect the tube turns together are such as to overcome the resistance of the metal.

The result is that the turns disengage from each other, with consequent breakage of the tube.

To overcome the aforesaid drawback, spiral protection tubes of greater strength are currently available in which the edges of the turns are shaped to engage each other by means of a profile very similar to a folded seam, which still provides the tube with flexibility and axial elasticity, although of a more limited extent.

When such tubes are bent into U-shape with a particularly small radius of curvature compared with their diameter, they are able to deform without the turn edges disengaging, and thus without the tube breaking. The problem of breakage under bending can therefore be said to be overcome. However, as their cost is substantially higher than more traditional tubes because of the many bending operations which the edges have to undergo, they are not suitable for general use.

The object of the present invention is to provide a spiral protection tube which overcomes the aforesaid drawbacks of known tubes by being of substantially contained cost while being able to withstand U-bending with a particularly small radius of curvature compared with its diameter without undergoing breakage.

This object is attained by a protection tube of the type comprising a strip wound to form turns joined together at their edges by the engagement of opposing facing surfaces, characterised in that said surfaces are folded to form with the main tube axis an acute angle ($\alpha$) exceeding 0° but less than 90°.

The tube is economical because the connection between the adjacent turns of the tube is obtained simply by a single fold in a pair of adjacent surfaces, however it is also strong because the inclined arrangement of said surfaces enables the strength of the material to be better utilized.

The invention is illustrated by way of nonlimiting example in the figures of the accompanying drawing, in which:

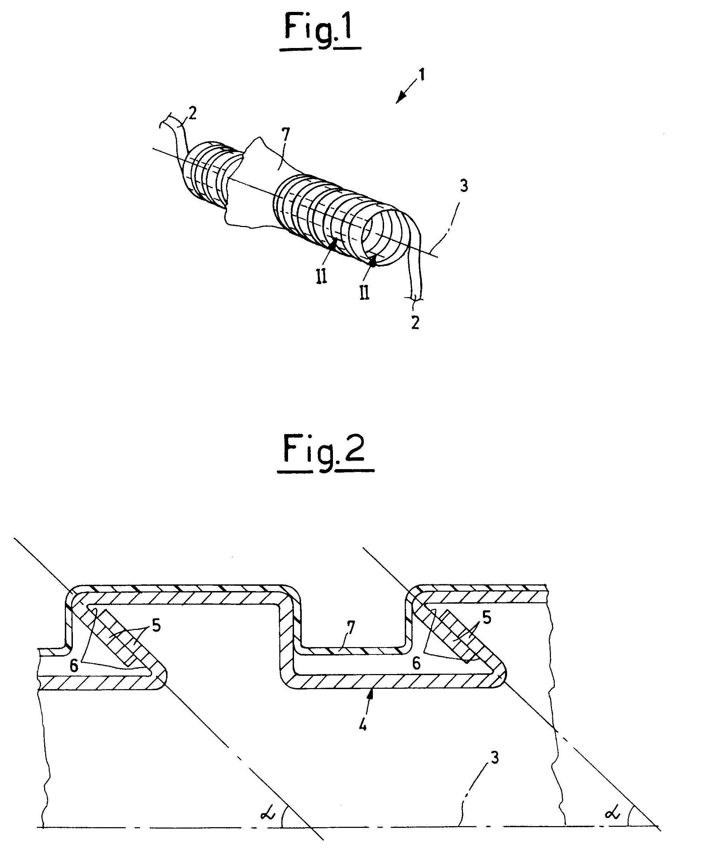

Figure 1 is a perspective view of a piece of tube according to the invention;

Figure 2 is a section on the line II-II of Figure 1.

With reference to said figures the tube of the invention, indicated overall by 1, is formed from a strip 2 which is shaped and then wound about an axis 3 or main axis of the tube 1, to form turns 4 which are joined together at their edges 5.

The edges 5 are folded to form pairs of opposing facing surfaces 6 bent to the axis 3 at an acute angle $\alpha$, which must be between 0° and 90° but not equal to either of these values.

In the case illustrated by way of example, the angle $\alpha$ is 45°. An acute angle $\alpha$ enables the resistant sections of this connection to be utilized to a maximum degree, while requiring only one folding operation on the edge.

The tube can be bent back upon itself to U-shape with a particularly small radius of curvature compared with its diameter, without said surfaces 5 disengaging from each other even if this bending causes local deformation of the tube.

On the basis of tests it has been found that for particularly small values of a the tube flexibility diminishes, so that in the case of strong bending the tube deforms even for radii of curvature which are basically large compared with the tube diameter. However as the strength of the engagement is greater than in the case of traditional tubes because of the increased utililzation of the resistant sections, the tube turns do not disengage and there is therefore no breakage.

In contrast, for larger values of a tending towards 90° the tube flexibility increases, so that in the case of strong bending the tube deforms only for basically much smaller radii of curvature, however in approaching this limit the resistance offered by the engagement between the turns is less than in the preceding case. The best compromise between elasticity and resistance has been found at a value of 45° for $\alpha$. It is however apparent that special working requirements could suggest different values of $\alpha$, chosen as required.

If the tube 1 is used to protect electrical conductors it is preferably covered with a sheath 7 of insulating elastic material preferably polyvinylchloride.

## Claims

1. A protection tube (1) of the type comprising a strip (2) wound to form turns (4) joined together at their edges (5) by the engagement of opposing facing surfaces (6), characterised in that said surfaces (6) are folded to form with the main axis (3) of the tube (1) an acute angle ($\alpha$) exceeding 0° but less than 90°.

2. A protection tube (1) as claimed in claim 1, characterised in that said angle ($\alpha$) is preferably 45°.

3. A protection tube (1) as claimed in claim 2, characterised by being covered with a sheath (7) of insulating elastic material.

4. A tube as claimed in claim 3, characterised in that the strip is formed from a steel alloy, the sheath being formed of polyvinylchloride.

## Fig.1

## Fig.2

**European Patent Office**

# EUROPEAN SEARCH REPORT

Application Number

# EP 91 20 1735

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 273 095  (KANAO) <br> * the whole document * <br> – – – – – | 1-4 | H 02 G 3/04 <br> F 16 L 11/16 |
| | | | **TECHNICAL FIELDS SEARCHED (Int. Cl.5)** |
| | | | H 02 G <br> F 16 L |

The present search report has been drawn up for all claims

| Place of search | Date of completion of search | Examiner |
|---|---|---|
| The Hague | 26 September 91 | RIEUTORT A.S. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document